# FASCICULE DE BREVET EUROPEEN

(11) **EP 0 456 562 B1**
(45) Date de publication et mention de la délivrance du brevet: **15.06.1994**
(21) Numéro de dépôt: 91401170.5
(22) Date de dépôt: 03.05.1991
(51) Int. Cl.: G21C 5/10, G21C 7/117

(54) **Equipements internes de réacteur nucléaire à guides de grappe**
Innere Anlage eines Stabbündelführungskernreaktors
Internal equipment of a spider-guide nuclear reactor

(30) Priorité: 07.05.1990 FR 9005729
(43) Date de publication de la demande: 13.11.1991
(73) Titulaire: FRAMATOME, 92084 Courbevoie (FR)
(72) Inventeur: Baujat, Jacques, F-78000 Versailles (FR); Chevereau, Gérard, F-93340 Le Raincy (FR)
(74) Mandataire: Fort, Jacques

(56) Documents cités:
- EP-A- 0 159 509
- EP-A- 0 329 541
- DE-A- 2 842 344
- FR-A- 1 452 399
- FR-A- 2 369 657
- US-A- 4 078 967

## Description

La présente invention concerne les équipements internes supérieurs pour réacteur nucléaire et elle trouve une application particulièrement importante dans les réacteurs refroidis et modérés par de l'eau.

Elle concerne plus particulièrement les équipements internes surmontant le coeur d'un réacteur nucléaire, ayant une plaque inférieure percée d'ouvertures de sortie du réfrigérant hors du coeur, une plaque supérieure, des colonnes support reliant les plaques, des guides de grappe destinés à des grappes de commande déplaçables verticalement entre une position où elles sont insérées dans le coeur et une position où elles sont extraites de ce dernier, chacun de ces guides ayant un tronçon supérieur fixé à la plaque supérieure et un tronçon inférieur s'étendant entre les plaques supérieure et inférieure.

Les guides de grappes de commande ont pour fonction de guider les crayons de la grappe, d'éviter leur déformation, et de protéger ces crayons quelle que soit leur position lors du fonctionnement normal du réacteur et en cas d'incident.

Ils comportent souvent, à la partie haute, un tube le long duquel sont réparties des plaques transversales guidant individuellement les crayons et, à la partie basse, des tubes fendus affectés chacun à un crayon.

On connaît également des guides de grappe dans lequel le tube est remplacé par des longerons verticaux.

Les guides sont individuellement munis d'un dispositif de guidage et de centrage de leur partie basse sur la plaque inférieure, constituant la plaque supérieure de coeur. Divers dispositifs de guidage et de centrage du guide par rapport à la plaque inférieure des équipements internes sont connus. Ils sont en général conçus de façon que les guides conservent la possibilité de se déplacer axialement, notamment pour permettre leur libre dilatation en service ou pour faciliter leur montage ou leur démontage éventuel, tout en fermant les jeux de guidage de façon que les guides ne vibrent pas sous l'effet de la turbulence générée par le fluide réfrigérant et tout en limitant les possibilités de déflexion latérale des guides en cas de séisme ou de dépressurisation accidentelle du réacteur, due à la rupture d'une tuyauterie de collecte du fluide réfrigérant à la sortie du coeur ; cela permet aux guides de conserver un alignement correct par rapport aux assemblages combustibles et permet aux grappes de commande de se déplacer librement.

Ces dispositifs de guidage sont souvent constitués d'organes élastiques qui présentent l'inconvénient d'assurer simultanément l'ensemble des fonctions précédentes. Leur conception s'avère alors délicate, car ils doivent à la fois être suffisamment souples pour s'accommoder au montage des défauts d'alignement résultant des tolérances de fabrication sur les guides et sur les plaques inférieure et supérieure des équipements internes supérieurs et suffisamment rigides pour empêcher la vibration des guides, sans que cela engendre lors du montage des contraintes excessives dans les organes élastiques.

Le document FR-A-2 591018 décrit un guide de grappe qui, pour dissocier la fonction de centrage de la fonction de limitation d'amplitude des déflexions latérales, comporte un dispositif de guidage et de centrage constitué par un jeu de plusieurs lames rigides ayant un jeu radial dans une ouverture de la plaque inférieure et par un jeu de plusieurs lames flexibles ayant une forme au repos telle qu'elles prennent un appui élastique sur le bord de l'ouverture dans la plaque inférieure. Cette solution représente un progrès par rapport à celles antérieurement connues. Mais elle ne dissocie pas complètement la fonction de centrage de celle de limitation des vibrations, puisque l'appui des lames flexibles participe à l'une et à l'autre.

La présente invention vise à fournir des équipements internes comportant des dispositifs de guidage ayant un découplage accru entre les différentes fonctions. Dans ce but, elle propose des équipements du type ci-dessus défini caractérisés en ce que le tronçon inférieur comporte une embase d'appui sur un siège tronconique solidaire de la plaque inférieure et en ce qu'il est soumis à l'action de moyens élastiques exerçant une force appliquant l'embase sur le siège.

Dans un mode avantageux de réalisation, le tronçon supérieur est fixé à la plaque supérieure et situé au-dessus de cette dernière et les moyens élastiques sont comprimés entre le fond du tronçon supérieur et un élément, tel qu'une plaque flottante, pouvant coulisser dans le tronçon supérieur et solidaire du tronçon inférieur. Ce dernier sera généralement maintenu dans une orientation déterminée par des moyens de clavetage coulissant par rapport à la plaque supérieure et/ou à la plaque inférieure.

Le tronçon inférieur peut comporter plusieurs longerons verticaux, au nombre de quatre par exemple, reliant les plaques transversales de guidage régulièrement réparties, dans lesquelles sont ménagées des ouvertures de forme adaptée à la répartition des crayons dans la grappe de commande. Les extrémités hautes des longerons peuvent être réunies par une bride reliée à l'élément soumis à l'action des moyens élastiques par des tiges de poussée. Les longerons peuvent se prolonger vers le bas jusqu'à l'embase ou s'arrêter à la dernière plaque transversale, qui est alors reliée à l'embase par des tubes individuels fendus de guidage.

Les colonnes support reliant les plaques supérieure et inférieure sont avantageusement placées autour des tronçons inférieurs de guides respectifs. Ces colonnes peuvent être constituées par des tubes dépourvus d'ouverture, lorsque la plaque inférieure est percée de passages de sortie du fluide réfrigérant débouchant entre les colonnes et lorsque les assemblages sont prévus pour que le fluide réfrigérant qui les a balayé puisse parvenir à ces passages. Dans le cas contraire, des passages de sortie du réfrigérant sont prévus à la partie basse des colonnes, là où les crayons des grappes de commande sont individuellement protégés contre l'action du fluide réfrigérant par des tubes fendus ou des organes similaires.

Quel que soit le mode de réalisation retenu, il dissocie la fonction de centrage et d'absorption des jeux de montage, assurée par le contact de l'embase avec le siège, de celle de limitation des vibrations, assurée par les moyens élastiques.

L'invention sera mieux comprise à la lecture de la description qui suit de modes particuliers d'exécution, donnés à titre d'exemples non limitatifs. La description se réfère aux dessins qui l'accompagnent, dans lesquels :
- la figure 1 est une vue simplifiée, en coupe verticale, de la partie supérieure d'un réacteur auquel peut être appliquée l'invention,
- la figure 2 est une vue en coupe suivant la ligne II-II des figures 3 à 6 montrant, à grande échelle, un dispositif de guidage suivant l'invention applicable au réacteur de la figure 1, et
- les figures 3 à 6 sont des vues en coupe suivant les lignes III-III, IV-IV, V-V et VI-VI de la figure 2,
- les figures 5 et 6, similaires à la figure 4, montrent des variantes de réalisation.

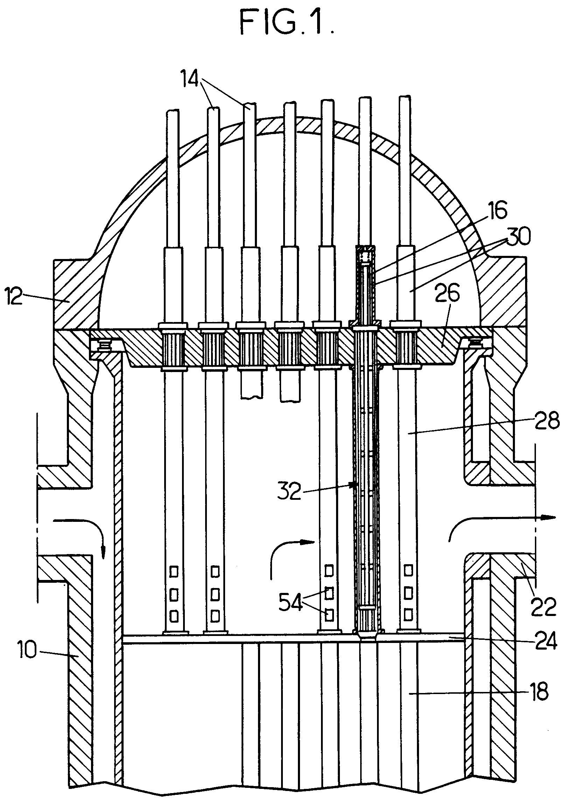

L'invention sera décrite, à titre d'exemple, dans son application à un réacteur à eau sous pression du genre montré en figure 1. Le réacteur montré en figure 1 comporte une cuve 10 de résistance à la pression de l'eau constituant réfrigérant et modérateur. La cuve est fermée par un couvercle 12 qui porte les mécanismes 14 de déplacement des grappes de commande dont une seule 16 est représentée. La cuve 10 contient le coeur 18 formé par juxtaposition d'assemblages combustibles ayant chacun un squelette et un faisceau de crayons combustibles répartis suivant un réseau régulier, carré ou triangulaire. Le squelette des assemblages comporte des tubes guides (non représentés) dans lesquels peuvent coulisser des crayons absorbants appartenant aux grappes de commande (ou éventuellement à des grappes de variation du spectre d'énergie des neutrons).

Le coeur est surmonté d'un ensemble qu'on désigne par le terme d'équipements internes supérieurs, généralement mécano-soudé. Cet ensemble remplit plusieurs fonctions. Il collecte le débit d'eau à haute température sortant du coeur et le dévie vers la tubulure ou les tubulures 22 de sortie de la cuve 10. Il retient et assure le centrage relatif des assemblages combustibles 18. Enfin, il guide les grappes de commande 16 équipant certains au moins des assemblages, au cours de leur déplacement vertical.

Les équipements internes supérieurs montrés en figure 1 comportent une plaque inférieure 24, qui reçoit la poussée des assemblages soumis à l'écoulement de l'eau sous pression, et une plaque supérieure 26 qui reporte la résultante des forces appliquées à l'ensemble des équipements internes supérieurs sur la cuve 10 et son couvercle 12. Les plaques 24 et 26 sont reliées par des colonnes entretoises 28 de forme tubulaire.

Enfin, des guides de grappe sont prévus à la verticale de chaque mécanisme 14. Chaque guide de grappe peut être considéré comme comprenant un tronçon supérieur 30 et un tronçon inférieur 32. Chacun des tronçons supérieurs est fixé de façon rigide à la plaque supérieure 26. Il est constitué d'un corps tubulaire terminé à sa partie inférieure par une bride qui s'applique contre la face supérieure de la plaque 26 et il est fermé à sa partie haute par un fond 33 percé d'un trou central 34 de passage de la tige de commande de la grappe. La bride est fixée contre la plaque supérieure 26 par des moyens démontables de nature quelconque, tels que des vis 36.

Le tronçon inférieur 32 est constitué, dans le mode de réalisation représenté, par un squelette se terminant vers le bas par une embase 40 destinée à s'appliquer contre un siège 42 solidaire de la plaque inférieure 24. Le squelette comprend également des longerons verticaux 38 reliant entre elles :
- plusieurs plaques transversales 44 régulièrement réparties, présentant une découpe correspondant à la répartition des crayons absorbants dans la grappe de commande (figures 4 et 5),
- une bride haute 46, dont le déplacement vers le bas est limité par un épaulement ménagé sur la plaque inférieure 26, la longueur du squelette étant telle qu'un jeu subsiste entre la bride et l'épaulement lorsque l'embase 40 est en appui sur le siège 42.

Dans le mode de réalisation illustré la plaque transversale 44 la plus basse et l'embase 40 sont reliées par des tubes fendus 52 de guidage continu des crayons de la grappe, protégeant ces crayons contre l'écoulement de réfrigérant et se substituant aux longerons.

Le siège 42 sera en général constitué par une pièce rapportée sur la plaque inférieure 24 et en appui contre un épaulement ménagé autour d'une ouverture 48 percée dans la plaque 24, en alignement avec un assemblage du coeur.

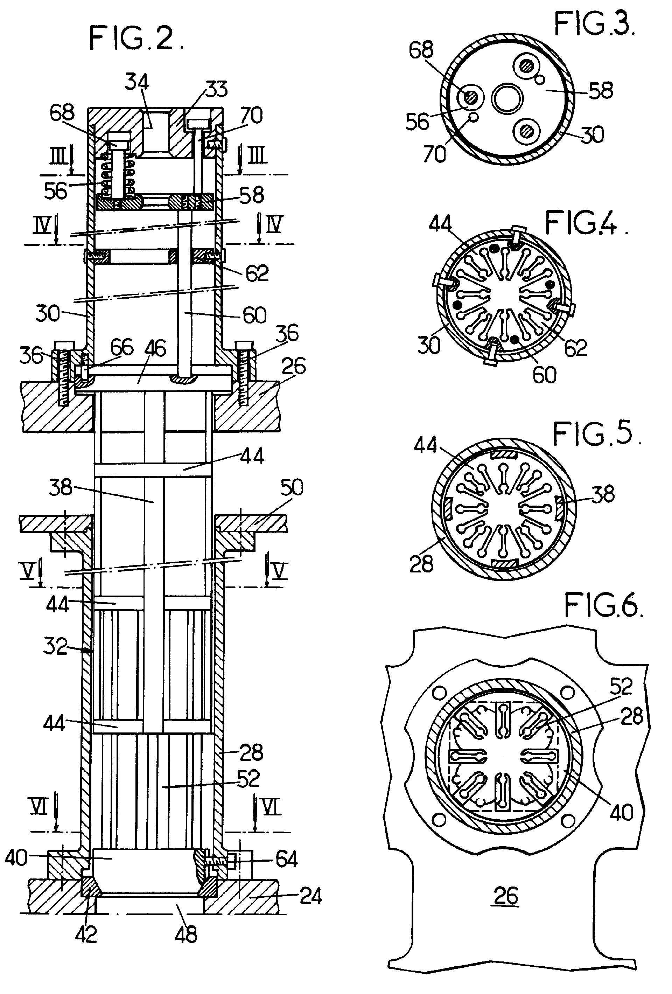

Dans le mode de réalisation de l'invention montré en figure 2, la plaque supérieure 26 est constituée par un caisson ayant une plaque proprement dite et une cloison 50, solidarisée de la plaque 26 par des moyens non représentés et délimitant un espace occupé par du réfrigérant. Chacune des colonnes support 28 est disposée autour d'un tronçon inférieur 32 et se termine par des brides dont l'une est fixée à la cloison 50 et l'autre à la plaque inférieure 24, par exemple par des vis. Si le réacteur est prévu pour que l'écoulement hors des assemblages traverse les passages 48 et les embases 40, de larges ouvertures 54 (figure 1) sont ménagées à la partie basse des colonnes. Si en revanche les passages de sortie du fluide réfrigérant hors du coeur sont prévus dans la plaque inférieure 24 entre les colonnes 28, ces ouvertures ne sont plus nécessaires.

Chaque guide de grappe suivant l'invention comporte des moyens élastiques destinés à appliquer l'embase 40 contre une portée ménagée sur le siège 42. Dans le cas illustré, la portée ménagée sur le siège est de forme tronconique et la surface d'appui de l'embase est également tronconique, ce qui garantit un bon centrage de l'embase, et donc de la partie basse du guide de grappe, sur le siège 42. Le même résultat pourrait être atteint avec une portée tronconique et une surface d'appui en forme de calotte sphérique.

Les moyens élastiques représentés en figures 2 à 4 comportent des ressorts 56, au nombre de trois, comprimés chacun entre le fond 33 du tronçon supérieur 30 et une plaque flottante 58 capable de coulisser verticalement dans le corps du tronçon supérieur. La plaque flottante 58 est reliée à la bride 46 par des tiges de poussée 60 guidées par des plaquettes 62 fixées au corps du tronçon supérieur et réduisant le risque de flambage.

L'équipage mobile constitué par le tronçon inférieur 32, les tiges 60 et la plaquette 58 est guidé et maintenu dans une orientation déterminée par des moyens qui comprennent, dans le cas représenté :
- un clavetage coulissant de l'embase 40 sur la colonne 28, constitué par exemple par un pion 64 qui s'engage dans une rainure verticale de l'embase 40 ;
- des goujons 66 fixés à la bride 46 et coulissant dans des trous borgnes percés dans le tronçon supérieur 30.

Les ressorts 56 seront généralement guidés par des vis 68 qui les traversent et dont la tête coulisse dans le fond 33. Enfin, des tiges de retenue 70 peuvent être fixées à la plaque flottante 58 afin de retenir le tronçon inférieur 32 lors de la mise en place du guide dans les internes.

Les ressorts 56 peuvent avoir un faible encombrement vertical, du fait qu'ils peuvent être très raides et que les variations de longueur des ressorts lorsqu'ils appliquent les embases 40 sur les sièges respectifs 42 ne dépassent pas quelques millimètres. Dans la pratique, ces ressorts et leur compression seront prévus pour que la force d'appui de l'embase sur son siège soit d'environ 1200 N. De plus, ils sont situés dans une zone où la dose de rayonnement est relativement faible ce qui garantit leur longévité. La portée du siège aura fréquemment une conicité comprise entre 25° et 45°.

## Revendications

1. Equipements internes surmontant le coeur d'un réacteur nucléaire, comportant une plaque inférieure (24) percée d'ouvertures de sortie du réfrigérant hors du coeur, une plaque supérieure (26), des colonnes support (28) reliant les plaques, et des guides destinés à des grappes de commande (16) déplaçables verticalement, chacun de ces guides ayant un tronçon supérieur (30) fixé à la plaque supérieure (26) et un tronçon inférieur(32) s'étendant entre les plaques supérieure (26) et inférieure (24),
caractérisés en ce que le tronçon inférieur (32) comporte une embase (40) d'appui sur un siège à portée tronconique (42) solidaire de la plaque inférieure (24) et est soumis à l'action de moyens élastiques (56) exerçant une force d'appui de l'embase sur le siège.

2. Equipements suivant la revendication 1, caractérisés en ce que le tronçon supérieur (30) est fixé à la plaque supérieure (26) au-dessus de cette dernière et en ce que les moyens élastiques (56) sont comprimés entre le fond (33) du tronçon supérieur et un élément (58) solidaire du tronçon inférieur (32).

3. Equipements selon la revendication 2, caractérisés en ce que ledit élément (58) solidaire du tronçon inférieur est constitué par une plaque flottante reliée audit tronçon inférieur (32) par des tiges de poussée (60) traversant des moyens (62) de guidage dans le tronçon supérieur.

4. Equipements selon la revendication 1, 2 ou 3, caractérisé en ce que le tronçon inférieur comporte plusieurs longerons verticaux reliant une bride supérieure (46) soumise à l'action des moyens élastiques, des plaques transversales (44) de guidage des crayons de la grappe contenus dans le guide et l'embase (40), éventuellement par l'intermédaire de tubes fendus (52) de guidage des crayons dans la partie basse du tronçon inférieur (32).

5. Equipements selon l'une quelconque des revendications précédentes, caractérisés par des moyens de maintien de l'embase (40) dans une orientation déterminée par rapport à la plaque inférieure (24).

6. Equipements selon la revendication 5, caractérisés en ce que les moyens de maintien d'orientation sont constitués par des moyens (64) de clavetage coulissant de l'embase (42).

7. Equipements selon l'une quelconque des revendications précédentes, caractérisés en ce que les colonnes support (28) sont disposées autour de tronçons inférieurs (32) respectifs.

## Patentansprüche

1. Innere Anlage eines Kernreaktors oberhalb des Reaktorkerns mit einer unteren Platte (24), die mit Ausgangsöffnungen versehen ist für den Austritt des Kühlmittels aus dem Reaktorkern und einer oberen Platte (26), mit Trägersäulen (28), die die Platten verbinden und Führungen für senkrecht verschiebbare Steuerstabbündel (16), wobei jede dieser Führungen einen oberen Abschnitt (30) aufweist, der an der oberen Platte (26) befestigt ist, und einen unteren Abschnitt (32), der sich zwischen der oberen (26) und der unteren Platte (24) erstreckt,
dadurch **gekennzeichnet**, daß
der untere Abschnitt (32) einen Sockel (40) zur Auflage auf einer kegelstumpfförmigen Lagerfläche (42) aufweist, die mit der unteren Platte (24) fest verbunden ist und wobei der untere Abschnitt einer Kraft elastischer Organe (56) ausgesetzt ist, die eine Andruckkraft des Sockels auf den Sitz erzeugen.

2. Innere Anlagen nach Anspruch 1,
dadurch gekennzeichnet, daß
der obere Abschnitt (30) an der oberen Platte (26) oberhalb der Platte befestigt ist und dadurch, daß die elastischen Organe (56) zwischen dem Ende (33) des oberen Abschnitts und einem Element (58), das mit dem unteren Abschnitt (32) fest verbunden ist, komprimiert sind.

3. Anlage nach Anspruch 2,
dadurch gekennzeichnet, daß
das mit dem unteren Abschnitt fest verbundene Element (58) aus einer beweglichen Platte besteht, die über die Führungsorgane (62) im oberen Abschnitt durchquerende Schiebestäbe (60) mit dem unteren Abschnitt (32) Abschnitt verbunden ist.

4. Anlage nach den Ansprüchen 1, 2 oder 3,
dadurch gekennzeichnet, daß
der untere Abschnitt mehrere senkrechte Träger aufweist, die einen oberen Flansch (46), der der Kraft der elastischen Organe ausgesetzt ist, mit Querplatten (44) zur Führung der Stäbe des in der Führung und dem Sockel (40) enthaltenen Bündels gegebenenfalls über geschlitzte Rohre (52) zur Führung der Stäbe im unteren Teil des unteren Abschnitts (32) verbinden.

5. Anlage nach einem der vorstehenden Ansprüche,
gekennzeichnet durch
Halterungsmittel für den Sockel (40) in einer vorbestimmten Relativlage zu der unteren Platte (24).

6. Anlage nach Anspruch 5,
dadurch gekennzeichnet, daß
die Mittel zur Halterung in einer vorbestimmten Relativlage aus gleitenden Schubkeilen des Sockels (42) bestehen.

7. Anlage nach einem der vorstehenden Ansprüche,
dadurch gekennzeichnet, daß
die Trägersäulen (28) um die jeweiligen unteren Abschnitte (32) herum angeordnet sind.

## Claims

1. Internals mounted over the core of a nuclear reactor, comprising a lower plate (24) formed with openings for coolant leaving the core, an upper plate (26), support columns (28) mutually connecting the plates, and guides for vertically movable control clusters (16), each of said guides having an upper section (30) secured to the upper plate (26) and a lower section (32) extending between the upper plate (26) and the lower plate (24),
characterized in that the lower section (32) comprises a base (40) bearing on a frusto-conical bearing surface of a seat (42) fast with the lower plate (24) and is subjected to the force of resilient means (56) biasing the base onto the seat.

2. Internals according to claim 1,
characterized in that the upper section (30) is secured to the upper plate (26) above the latter and in that the resilient means (56) are compressed between the bottom (33) of the upper section and an element (58) fast with the lower section (32).

3. Internals according to claim 2,
characterized in that said element (58) fast with the lower section is a floating plate connected to said lower section (32) by thrust rods (60) passing through guide means (62) in the upper section.

4. Internals according to claims 1, 2 or 3,
characterized in that the lower section comprises several vertical longitudinal members connecting an upper flange (46) subjected to the force of the resilient means, transverse plates (42) for guiding the rods of the cluster in the guide and base (40), possibly through plate tubes (52) for guiding the rods in the lower portion of the lower section (32).

5. Internals according to any one of the preceding claims,
characterized by means for holding the base (40) in a given angular position with respect to the lower plate (24).

6. Internals according to claim 5,
characterized in that the means for maintaining an orientation are formed by means (64) for slidably keying the base (42).

7. Internals according to any one of the preceding claims,
characterized in that the support columns (28) are disposed about respective lower sections (32).
